# EUROPEAN PATENT SPECIFICATION

(11) **EP 0 412 759 B1**
(45) Date of publication and mention of the grant of the patent: **08.05.1996**
(21) Application number: 90308645.2
(22) Date of filing: 06.08.1990
(51) Int. Cl.: C08G 59/40, C08G 18/58, C08G 59/68

(54) **Heat-curable type resinous composition and moulded article prepared therefrom**
Wärmehärtbare Harzzusammensetzung und damit hergestellte Gegenstände
Composition de résines thermodurcissable et objets formés qui en sont préparés

(30) Priority: 08.08.1989 JP 205298/89
(43) Date of publication of application: 13.02.1991
(73) Proprietor: NIPPON PAINT CO., LTD., Osaka-shi Osaka 572 (JP)
(72) Inventor: Iwamoto, Norikazu, Kobe-shi, Hyoga-ken (JP)
(74) Representative: Lamb, John Baxter

(56) References cited:
- EP-A- 0 342 064
- WO-A-86/06734
- CHEMISTRY LETTERS. no. 11, 1986, TOKYO JP pages 1963-1966; M.FUJIWARA ET AL.: 'Cycloaddition reaction of 2,3-disubstituted oxiranes with isocyanates by highly activated caralyst'

## Description

The present invention relates to three-component or two-component heat-curing type resinous composition comprising polyisocyanate, polyepoxide and catalyst and to heat-resisting moulded articles prepared therefrom, consisting essentially of polyoxazolidone and containing an amount as small as possible of trimerized polyisocyanate.

The so-called heat-curing type resinous compositions have been widely used as molding, impregnation, lamination and injection molding materials as well as various electric insulation material,structural plastics, coating material, adhesives and the like. Recently, with an increasing demand of using such materials under much severe conditions, heat-resistance of such materials become the center of public concerns.

Since the plastics formed by the reaction of polyisocyanate and polyepoxide have excellent thermal properties, many efforts are concentrated in the development works of this novel type of resinous materials.

It is in general recognized that the resins obtained by the reaction of polyisocyanates and polyepoxides are excellent in heat-resisting properties, but are undesirably hard and brittle and have the problems of deficient impact strength.

Excellent heat-resisting properties are believed to be due to their specific ring structure having oxazolidone groups and isocyanurate groups produced by the reaction of the indicated materials, and poor impact strength and the like are due to the presence of excessively highly crosslinked structures derived from isocyanurate groups. Therefore, it is expected that stiff resins might be obtained by the reaction of polyepoxide and polyisocyanate if only something be devised to give polyoxazolidone containing an amount of isocyanurate which is as small as possible.

Oxazolidone ring-formation reaction is in general carried out without using a catalyst at an elevated temperature. If desired, e.g. the following catalysts may be used:

tertiary amines (e.g. imidazole, hexamethylene tetramine), tetraethyl ammonium iodide, a combination of aluminium chloride and pyrrolidone, a combination of aluminium chloride and phosphoric ester, lithium halides, a complex of lithium halide and phosphoric acid (e.g. complex of lithium bromide and tributyl phosphine oxide). Recently, Matuda et al reported in J. Org. Chem. p.2177 to 2184, (12) 1986 and Chemistry Letters, p.1963 to 1966, 1986, complexes of organo tin halides and Lewis bases or stibonium salts as novel catalysts for oxazolidone formation. Marks and Plepys disclosed in Japanese Patent Publication (unexamined) 500730/87 organoantimony compounds as an effective catalyst for the preparation of polyoxazolidone resins.

In the case of reaction between mono-functional compounds, i.e. monoepoxide and monoisocyanate, the desired oxazolidone compound may be obtained in the presence of such catalyst, though the reaction must be carried out at a higher temperature for a long period of time. However., in the case of reaction between highly functional polyepoxide and polyisocyanate,the reactions involved are more complicated and a certain quantity of undesired by-products is always formed. Such by-products are essentially trimerized isocyanate and polyether produced by the homopolymerization of epoxide. Among them, trimerized isocyanates may give rise to highly crosslinked, brittle polymers and therefore, the trimerization reaction must be effectively controlled. Nevertheless, heretofore proposed catalysts for the formation of polyoxazolidone are not only effective for the oxazolidone formation reaction, but also for the isocyanurate formation reaction and therefore, the polyoxazolidone products prepared by the known processes do always include 30 mol % or more isocyanurate. Furthermore, in the reaction between isocyanate and epoxide, with the increase in the amounts of said epoxide, a strong exothermic reaction is liable to occur, causing scorch in the formed mouldings and heat deterioration of the moulded article. For this reason, it has long been desired to provide a method for the preparation of polyoxazolidone containing smaller amounts of trimerized isocyanate by the reaction of polyepoxide and polyisocyanate under mild conditions.

It is, therefore, an object of the invention to provide a heatcuring type resinous composition capable of forming a high quality polyoxazolidone resin through the reaction of polyepoxide and polyisocyanate components and to provide a moulded article with excellent heat-resisting properties composed of polyoxazolidone containing isocyanurate groups in an amount as small as possible.

According to the invention there is provided a heat-curable resinous composition comprising:-
(a) at least one bi-to hexafunctional polyisocyanate;
(b) at least one bi-to hexa-functional polyepoxide and;
(c) a catalyst system comprising
   (i) an organo antimony halide of the formula R₃SbX₂ in which X represents halogen and each R independently represents an aliphatic, aromatic or alicyclic organic group;
   (ii)an organo tin halide and/or zinc halide.

In accordance with one particular embodiment of the invention, the composition is formulated as a three pack composition, each pack containing (a), (b) or (c) separately. In accordance with another particular embodiment, the composition is formulated as a two pack composition, one pack containing (a) and the other pack containing (b), (c) being present in either one of said pack. In accordance with a further particular embodiment of the invention, the composition is formulated as a two part composition, one pack containing (a) and the other pack containing (b), c(i) being present in one pack and c(ii) in the other pack.

The invention also provides a heat-resisting moulded article obtaining by reacting any one of the above resinous compositions in a mould at a temperature between room temperature and 150°C.

The present resinous composition comprises basically polyepoxide, polyisocyanate and catalyst and in this invention, said composition is heated and reacted under mild conditions for a short period of time in a mould to obtain a heat-resisting moulded article.

In this method, the principal reaction is an oxazolidone formation reaction and there are quite few polyisocyanate trimerization and polyepoxide homopolymerization reactions.

As a consequence, in the polymer precursor formed, there are no or only very small amounts of isocyanurate groups. The total reaction speed is comparatively high and the desired mouldings can be prepared under mild conditions.

The present reactive resinous composition may be provided as three-package or two-package type composition.

The first polyisocyanate component may be any of the bi-to hexa functional organopolyisocyanate compounds well known in the polyurethane art. Examples of the said organopolyisocyanate compounds are aromatic polyisocyanates such as 2,4-tolylene diisocyanate, 2,6-tolylene diisocyanate, naphthylene-1,5-diisocyanate or diphenylmethane-4,4'-diisocyanate; aliphatic or alicyclic polyisocyanates such as hexamethylene diisocyanate, hydrogenated diphenyl methane-4,4'-diisocyanate, isophorone diisocyanate, hydrogenated 2,4-tolylene diisocyanate or hydrogenated 2,6-tolylene diisocyanate. Various modified polyisocyanates are reported in the literature and offered in the market, such as, for example, polyisocyanate pre-polymers having terminal isocyanate groups obtained by the reaction of a polyisocyanate and an active hydrogen compound as stated in US 3,394,164 and sold e.g. under the names of ®Isonate 181 (Dow chem. Co) or ®Mondur PF (Mobay); Carbodiimide or uretonimine bearing polyisocyanates as reported in US 3,152,162 and sold e.g. under the names of ®Isonate 1431 (Dow Chem Co.), ®Mondur CD (Mobay) or Milionate® MTL (Nippon polyurethane K.K.); biuret group containing polyisocyanates as reported in US 3,124,605 and sold e.g. under the name of ®Desmodur N (Mobay); isocyanurate ring containing polyisocyanates as reported in US 3,001,973 and sold e.g. under the names of ®Desmodur Z-4370 and Desmodur® CTStabil (Mobay). These modified polyisocyanates may be satisfactorily used in this invention. In general, particular preference is given to crude polyisocyanate products such as crude tolylene diisocyanates obtained by phosgenation of tolylene diamine mixtures or crude diphenyl methylene diisocyanates obtained by phosgenation of crude diphenyl methylene diamine.

As the epoxide component, any aliphatic, alicyclic, aromatic or heterocyclic compounds having 2 or more epoxy groups may be satisfactorily used. With a view to composition viscosity, application easiness and heat-resisting properties of the moulded articles, particularly preferable are compounds having 2 to 4, most preferably 2, epoxy groups per molecule,and an epoxy equivalent of 90 to 500, most preferably 170 to 220.

Examples of preferred epoxides are bisphenol A diglycidyl ether or halogen substituted derivatives thereof and bisphenol F diglycidyl ether.

Examples of such epoxy resins are the products sold under the names of DER-332, DER-542 (Dow chem. Co.), YD-128, YDF- 170 (Tohto Kasei), ®Epicoat 828 (Shell), ®Epiclon 850 and ®Epiclon 830 (Dainippon Ink). Polynuclear glycidyl ether derived resins and epoxide phenyl novolak resins are also useful. Such products are sold e.g. under the names of DEN-431 and DEN-438 (Dow Chem. Co.) or EPN-1139 and ECN-1235 (Ciba-Geigy). Aromatic glycidyl amine resins based on aromatic amines and epichloro-hydrin are likewise useful and examples are triglycidyl-p-aminophenol and N,N,N',N'-tetraglycidyl-4,4'-diaminodiphenyl methane. Another group of appropriate epoxy resins are glycidyl esters of aromatic, aliphatic or alicyclic polybasic acids and the glycidyl ethers of reaction products of aromatic or alicyclic dicarboxylic acids and polyols.

Examples of such epoxy resins are CY-192, CY-184 (Ciba-Geigy) or EPOMIK®-508 and EPOMIK®-540 (Mitsui Sekiyu Kagaku K.K.). Appropriate aliphatic epoxy resins are glycidyl ethers of alkyleneglycols and glycidyl ethers of polyetherpolyols, sold e.g. under the names of DER-736 and DER-732 (Dow chem. Co.) or EPOMIK® R-810 (Mitsui Sekiyu Kagaku K.K.). Epoxidation products of cycloolefins are also appropriate and such epoxy resins are 3,4-epoxy cyclohexane carboxylates sold e.g. under the names of ERL-4221 (Union Carbid) or CY-179 (Ciba-Geigy).

These may be used each singularly or in a combination of 2 or more.

The catalyst component promotes the oxazolidone ring formation reaction of epoxide and isocyanate. The catalyst systems to be used according to the invention are (a) complexes of organo antimony halides and organo tin halides, and (b) complexes of organo antimony halides and zinc halides.

The organo antimony halides used as a component of said complex are represented by the formula:${\text{R}}_{\text{3}} {\text{SbX}}_{\text{2}}$ in which X represents halogen (such as bromine and iodine); and each R independently represents an aliphatic, aromatic or alicyclic organic group.

Examples of such organo antimony halides are triphenyl antimony diiodide, triphenyl antimony dibromide, tribenzyl antimony diiodide, tribenzyl antimony dibromide, tributyl antimony diiodide and tributyl antimony dibromide.

As an organo tin halide, the following compounds may be advantageously used.${\text{R}}_{\text{m}} {\text{Sn X}}_{\text{(4-m)}}$ in which X represents halogen (e.g. bromine and iodine); m is an integer of 1 to 3; and each R independently represents an aliphatic, aromatic or alicyclic organic group.

Examples of preferred tin compounds are trimethyl tin iodide, trimethyl tin bromide, dimethyl tin diiodide, dimethyl tin dibromide, tripropyl tin iodide, tripropyl tin bromide, dipropyl tin diiodide, dipropyl tin dibromide, tributyl tin iodide, tributyl tin bromide, dibutyl tin diiodide, dibutyl tin dibromide, trioctyl tin iodide, trioctyl tin bromide, dioctyl tin diiodide, dioctyl tin dibromide, triphenyl tin iodide, triphenyl tin bromide, diphenyl tin diiodide, diphenyl tin dibromide, tricyclohexyl tin iodide, tricyclohexyl tin bromide, dicyclohexyl tin diiodide and dicyclohexyl tin dibromide.

As already stated, combinations of these components, which are believed to be present in the form of complexes, are used as catalyst systems in this invention. Such a complex can be advantageously prepared by reacting the constituting components, preferably in an equimolar ratio, in the presence or absence of a solvent at a temperature between room temperature and 150°C. The catalyst system may be present, together with an appropriate solvent, as a separate component or in either one of said polyisocyanate component or polyepoxide component of the present resinous compositions.

The amount of such catalyst preferably is in the range of 0.01 to 10% by weight, most preferably 0.1 to 5 % by weight, of the total weight of the polyepoxide and polyisocyanate.

It is of course possible to use a combination of different catalyst systems.

The inventors have surprisingly found that even if the two catalyst components are included separately in the polyepoxide and polyisocyanate, respectively, and these catalyst components are combined with each other only in the heat-curing step of the resinous composition, the thus formed complex is effective as a catalyst. When the entire catalyst system is added to either one of the polyepoxide or polyisocyanate, it may happen that the storage stability is adversely affected. Therefore, separate inclusion of the catalyst components in the polyepoxide and polyisocyanate can afford particularly preferable two-package compositions. More specifically, in the case of a complex of organo antimony halide and organo tin halide, said organo tin halide is preferably added to the polyisocyanate component and the organo antimony halide to the polyepoxide component. In the case of a complex of organo antimony halide and zinc halide, the former is added to the polyisocyanate component and the zinc halide to the polyepoxide component. In such cases, the respective catalyst component maintains its activity, without affecting storage stability of the respective resinous component, i.e. polyepoxide or polyisocyanate.

In this invention, apart from the abovementioned essential components, any of the conventional additives such as fillers, reinforcement fibers, antioxidants, flame retardants, mould releasing agents, pigments, surfactants, further catalysts and defoamers may be added as desired.

The oxazolidone groups formed with the present heat-curing type resinous compositions are known, as well as isocyanurate groups, to provide the resin with far better heat distortion properties and thermal stabilities than urethane groups. Furthermore, such polymer exhibits excellent chemical resistance and solvent stability.

Incidentally, depending on the relative amounts of polyepoxide and polyisocyanate used, properties of the polyoxazolidone resins may be varied to a certain extent. When a stoichiometrical excess of polyisocyanate is used, there results a polymer precursor having terminal isocyanate groups and oxazolidone bonds in the main chain. When a stoichiometrical excess of epoxide is used, a polymer precursor having terminal epoxy groups and oxazolidone bonds in the main chain is formed. When substantially equivalent amounts of polyepoxide and polyisocyanate are used, a high molecular weight polyoxazolidone is obtained. Since various polymers or polymer precursors having different properties can be prepared according to the invention by varying the weight ratio of polyepoxide and polyisocyanate used, such weight ratio is not limited to a specific range and may be varied in a comparatively wide range.

From the isocyanate terminated oxazolidone polymer precursors it is possible to prepare waxes, elastomers, foams, coating materials and adhesives by using conventional techniques for the preparation of polyurethanes or polyureas.

From the epoxy terminated oxazolidone polymer precursors various coating materials or adhesives may be obtained by reaction with an epoxy hardener. Oxazolidone polymers are e.g. suitable for the preparation of moulded articles, coatings and adhesives.

The present resinous compositions are also useful as an impregnation material for electric insulating articles and glass fiber reinforced laminates, as an injection material for the preparation of print base plates or electric parts for computers and as a starting material for the preparation of automobile and airplane parts which are required to have improved stress properties and heat resistance. Among them, the most important application of the present resinous composition is the preparation of heat-resisting moulded articles.

Therefore, according to the second aspect of the invention, there is provided a polyoxazolidone moulded article having excellent heat resisting properties prepared by reacting the present resinous compositions in a mould at a temperature of room temperature to 150°C.

The oxazolidone forming reaction is carried out by reacting polyisocyanate and polyepoxide in the presence of the special catalyst system described above. The reaction temperature may be varied within a range of from room temperature to 150°C, preferably from 40° to 150°C. The optimum temperature usually is in the range of 60° to 120°C, depending on the employed polyisocyanate and polyepoxide. In a more preferable embodiment, the obtained poly-oxazolidone resin is subjected to post curing at a temperature of 100° to 300°C, preferably 120° to 200°C.

If desired, the oxazolidone forming reaction may be carried out in the presence of an appropriate solvent or diluent which is inert to the abovementioned reaction. Examples of such solvents or diluents are aromatic solvents, esters or halides. Preferably, such solvent or diluent should not affect formation of the catatalyst or the catalyst itself. Said reaction may be carried out batchwise or continuously. When using a separated catalyst component system as described above, the moulded article may be prepared by either the one shot method or the prepolymer method heretofore known in the art. Any conventional moulding process including vacuum defoaming moulding and injection moulding may be advantageously used.

The invention shall now be more fully explained in the following Examples.

### Example 1

Into a 100ml flask containing 40.5g of dichloromethane were added 16.5g of dimethyl tin diiodide (Me₂SnI₂) and 24.0g of triphenyl antimony diiodide (Ph₃SbI₂) and the mixture was stirred at room temperature for about 1 hour to obtain a catalyst solution.

In a separate 50ml flask were placed 3.5g of a bisphenol A epichlorohydrin epoxy resin having an epoxy equivalent of 175 and to this, were added 0.38g of the abovementioned catalyst solution and stirred to effect defoaming.

To the abovementioned solution 2.9g of low viscosity diphenylmethane diisocyanate having an NCO content of 29% were added at room temperature and stirred to effect defoaming.

Thereafter the content was heated at 80°C for 1 hour to obtain a hard, tough polymer. An Infra-red absorption spectrum of this polymer showed that the characteristic absorptions at 910cm⁻¹ of the epoxy group and 2250cm⁻¹ of the isocyanate group had disappeared whereas there was a strong absorption at 1740cm⁻¹ of the oxazolidone group.

It was also found that only a small quantity of isocyanurate groups (1705cm⁻¹) had been formed.

### Example 2

Into a 50ml flask were placed 3.5g of a bisphenol A epichlorohydrin epoxy resin having an epoxy equivalent of 175 and 0.38g of the catalyst solution obtained in Example 1, and the mixture was stirred and defoamed.

To this, 2.61g of a low viscosity polyisocyanate compound based on dicyclohexyl methane diisocyanate, whose NCO content was 32%, were added at room temperature, stirred and defoamed.

The resinous composition was heated at 100°C for 1 hour to obtain a hard, tough polymer.

An Infra-red absorption spectrum of this polymer showed that the characteristic absorptions at 910cm⁻¹ of the epoxy group and 2250cm⁻¹ of the isocyanate group had almost completely disappeared and that there was an absorption at 1740cm⁻¹ indicating the formation of oxazolidone groups but no indication (1705cm⁻¹) of isocyanurate groups.

### Example 3

Into a 100ml flask containing 38.7g of acetone were added 4.5g of zinc dibromide and 12.1g of triphenyl antimony diiodide (Ph₃SbI₂) and the mixture was stirred at room temperature for about 1 hour to obtain a catalyst solution.

Into a 50ml flask, were placed 3.5g of a bisphenol A epichlorohydrin epoxy resin having an epoxy equivalent of 175 and 0.55g of the abovementioned catalyst solution and stirred to effect defoaming.

To this, 2.9g of a low viscosity polyisocyanate compound based on diphenylmethane diisocyanate, whose NCO content was 29%, were added at room temperature, stirred and defoamed.

The resinous composition was heated at 80°C for 1hour to obtain a hard, though polymer.

An Infra-red absorption spectrum of this polymer showed that the characteristic peaks at 910cm⁻¹ of the epoxy group and 2250cm⁻¹ of the isocyanate group had almost completely disappeared and that there was a clear indication for the formation of oxazolidone groups at 1740cm⁻¹, but substantially no indication for the formation of isocyanurate groups at 1705cm⁻¹.

### Example 4

Into a 30ml flask were placed 3.5g of a bisphenol A epichlorohydrin epoxy resin having an epoxy equivalent of 175 and an acetone solution containing 0.066g of zinc diiodide (ZnI₂) and 0.12g of triphenyl antimony diiodide, and the mixture was- stirred and defoamed.

To this, 2.9g of a low viscosity polyisocyanate compound based on diphenylmethane diisocyanate, whose NCO content was 29%, were added at room temperature, stirred and defoamed.

This resinous composition was heated at 80°C for 1 hour to obtain a hard, though polymer.

An Infra-red absorption spectrum of this polymer showed that the characteristic peaks at 910cm⁻¹ of the epoxy group and 2250cm⁻¹ of the isocyanate group had almost completely disappeared and that there was a clear indication of the formation of oxazolidone groups (1740cm⁻¹) and only a very small amount of isocyanurate groups (1705cm⁻¹).

### Example 5

Into a 20ml flask were placed 3.5g of a bisphenol A epichlorohydrin epoxy resin having an epoxy equivalent of 175 and 0.55g of the catalyst solution obtained in Example 3, and the mixture was stirred and defoamed.

To this, 2.62g of a low viscosity polyisocyanate based on dicyclohexyl methane diisocyanate, having an NCO content of 32% were added at room temperature and the mixture was stirred to effect defoaming and then reacted at 100°C for 1 hour to obtain a hard, tough polymer.

An Infra-red absorption spectrum of this polymer showed that the characteristic peaks at 910cm⁻¹ of the epoxy group and 2250cm⁻¹ of the isocyanate group had almost completely disappeared and that there was a clear indication for the formation of oxazolidone groups (1740cm⁻¹) and no isocyanurate groups (1705cm⁻¹).

### Example 6

Into a 50ml flask were placed 3.5g of an epoxide phenyl novolak resin having an epoxy equivalent of 175 and 0.38g of the catalyst solution obtained in Example 1, and the mixture was stirred and defoamed.

To this, 2.9g of a low viscosity polyisocyanate compound based on diphenylmethane diisocyanate, whose NCO content was 29%, were added at room temperature, stirred and defoamed.

This resinous composition was heated at 80°C for 1 hour to obtain a hard, though polymer.

An infra-red absorption spectrum of this polymer showed that the characteristic peaks at 910cm⁻¹ of the epoxy group and 2250cm⁻¹ of the isocyanate group had disappeared and that there was a clear indication for the formation of oxazolidone groups (1740cm⁻¹), but only of small amounts of isocyanurate groups (1705cm⁻¹).

### Example 7

Into a 50ml flask were placed 3.5g of an epoxide phenyl novolak resin having an epoxy equivalent of 175 and 0.55g of the catalyst solution obtained in Example 3, and the mixture was stirred and defoamed.

To this, 2.9g of a low viscosity polyisocyanate compound based on diphenylmethane diisocyanate, whose NCO content was 29%, were added at room temperature, stirred and defoamed.

The resinous composition was heated at 100°C for 1 hour to obtain a hard, though polymer.

An Infra-red absorption spectrum of this polymer showed that the characteristic peaks at 910cm⁻¹ of the epoxy group and 2250cm⁻¹ of the isocyanate group had disappeared and that there was a clear indication for the formation of oxazolidone groups (1740cm⁻¹), but no isocyanurate groups (1705cm⁻¹).

### Example 8

To 100g of a bisphenol A epichlorohydrin epoxy resin having an epoxy equivalent of 175 were added 5.2g of 25% zinc dibromide-acetone solution, and the mixture was stirred and defoamed under reduced pressure to obtain a polyepoxide component solution.

Separately, to 100g of a low viscosity polyisocyanate compound based on diphenylmethane diisocyanate having an NCO content of 29% were added 16.6g of 25% triphenyl antimony diiodide chloroform solution and the mixture was stirred and defoamed under reduced pressure to obtain a polyisocyanate component solution.

3.55g of the abovementioned polyepoxide solution and 3.02g of the polyisocyanate solution were placed in a 50ml flask and the mixture was stirred at room temperature to effect defoaming and then reacted at 80°C for 1 hour to obtain a hard, tough polymer.

An Infra-red absorption spectrum of this polymer showed that there were no absorption peaks at 910cm⁻¹ of the epoxy group and 2250cm⁻¹ of the isocyanate group.

There was the peak at 1740cm⁻¹ of the oxazolidone group but no peak at 1705cm⁻¹ of the isocyanurate group.

The abovementioned polyepoxide solution and polyisocyanate solution each showed excellent storage stability.

### Comparative Example 1

Into a 50ml flask were placed 3.5g of a bisphenol A epichlorohydrin epoxy resin having an epoxy equivalent of 175 and 0.48g of 25% triphenyl antimony diiodide chloroform solution and the mixture was stirred and defoamed.

To this, 2.9g of a low viscosity polyisocyanate compound based on diphenyl methane diisocyanate, having an NCO content of 29% were added at room temperatures and the mixture was stirred and defoamed.

The mixture was heated at 100°C for 1 hour to obtain a hard, brittle polymer.

The Infra-red absorption spectrum showed that there were certain quantities of epoxy groups (910cm⁻¹) and isocyanate groups (2250cm⁻¹) in the product.

There were also detected the peaks at 1740cm⁻¹ of the oxazolidone group and at 1705cm⁻¹ of the isocyanurate group.

### Comparative Examples 2-4

The experiments as stated in Comparative Example 1 were repeated except using the compounds shown in Table 1 as catalyst.

Hard polymers were only obtained in the cases of Comparative Examples 2 and 3.

The polymer obtained in Comparative Example 4 was liquid.

In the polymers epoxy groups and isocyanate groups were detected by infra-red absorption spectra.

Isocyanurate groups were also detected, as well as oxazolidone groups.

**Table 1**

| Comp-Example | catalyst | amount | polymer obtained |
|---|---|---|---|
| 2 | Me₂SnI₂ | 0.08 | good appearance brittle solid |
| 3 | ZnI₂ | 0.05 | good appearance brittle solid |
| 4 | ZnBr₂ | 0.06 | viscous liquid |

## Claims

1. A heat-curable resinous composition comprising:-
(a) at least one bi-to hexafunctional polyisocyanate;
(b) at least one bi-to hexa-functional polyepoxide and;
(c) a catalyst system comprising
(i) an organo antimony halide of the formula R₃SbX₂ in which X represents halogen and each R independently represents an aliphatic, aromatic or alicyclic organic group;
(ii) an organo tin halide and/or zinc halide.

2. A composition according to Claim 1 which is formulated as three packs' composition, each pack, containing (a), (b) or (c) separately.

3. A composition according to Claim 1 which is formulated as two packs' composition, one pack containing (a) and the other pack (b), and (c) is contained in either one of said two packs.

4. A composition according to Claim 1 which is formulated as two packs' composition, one pack containing (a) and the other pack (b), wherein (c(i)) is contained in one and (c(ii)) in the other of said two packs.

5. A heat-resisting moulded article obtained by reacting a resinous composition as claimed in any one of the preceding claims in a mould at a temperature between room temperature and 150°C.

## Patentansprüche

1. Wärmehärtbare Harzmischung, umfassend:
(a) mindestens ein bi- bis hexafunktionales Polyisocyanat;
(b) mindestens ein bi- bis hexafunktionales Polyepoxid; und
(c) ein Katalysatorsystem, umfassend
(i) ein organisches Antimonhalogenid der Formel R₃SbX₂, worin X ein Halogen darstellt und R jeweils unabhängig eine aliphatische, aromatische oder alicyclische organische Gruppe darstellt;
(ii) ein organisches Zinnhalogenid und/oder Zinkhalogenid.

2. Harzmischung nach Anspruch 1, zubereitet als 3-Pack-Zusammensetzung, wobei jedes Pack separat (a). (b) oder (c) enthält.

3. Harzmischung nach Anspruch 1, zubereitet als 2-Pack-Zusammensetzung, wobei das eine Pack das (a) und das andere das (b) enthält, und (c) in einem der zwei Packs enthalten ist.

4. Harzmischung nach Anspruch 1, zubereitet als 2-Pack-Zusammensetzung, wobei das eine Pack das (a) und das andere das (b) enthält, und (c(i)) in dem einem und (c(ii)) in dem anderen der zwei Packs enthalten ist.

5. Wärmefester Formartikel, erhalten durch Umsetzen einer Harzmischung nach einem der vorhergehenden Ansprüche in einer Form bei einer Temperatur zwischen Raumtemperatur und 150°C.

## Revendications

1. Composition résineuse thermodurcissable, comprenant:
(a) au moins un polyisocyanate bi- à hexafonctionnel;
(b) au moins un polyépoxyde bi- à hexafonctionnel; et
(c) un systeme catalytique comprenant
(i) un halogénure d'organo-antimoine de formule R₃SbX₂ où X représente un halogène et chaque R représente indépendamment un groupe organique aliphatique, aromatique ou alicyclique;
(ii) un halogénure d'organo-étain et/ou halogénure d'organo-zinc.

2. Composition selon la revendication 1, qui est formulée sous la forme d'une composition à trois paquets, chaque paquet contenant (a), (b) ou (c) séparément.

3. Composition selon la revendication 1, qui est formulée sous la forme d'une composition à deux paquets, un paquet contenant (a) et l'autre paquet (b), et (c) est contenu dans l'un ou l'autre desdits deux paquets.

4. Composition selon la revendication 1, qui est formulée sous la forme d'une composition à deux paquets, un paquet contenant (a) et l'autre paquet (b), (c(i)) étant contenu dans l'un desdits deux paquets et (c(ii)) dans l'autre.

5. Article moulé thermoresistant, obtenu en faisant réagir une composition résineuse telle que revendiquée dans l'une quelconque des revendications précédentes dans un moule à une température entre la température ambiante et 150°C.
